(19) **Europäisches Patentamt / European Patent Office / Office européen des brevets**

(11) **EP 1 738 513 B1**

(12) **FASCICULE DE BREVET EUROPEEN**

(45) Date de publication et mention de la délivrance du brevet:
**12.04.2017 Bulletin 2017/15**

(51) Int Cl.:
*H04L 1/06* (2006.01)  *H04L 25/02* (2006.01)

(21) Numéro de dépôt: **05760052.0**

(22) Date de dépôt: **19.04.2005**

(86) Numéro de dépôt international:
**PCT/FR2005/000965**

(87) Numéro de publication internationale:
**WO 2005/112329 (24.11.2005 Gazette 2005/47)**

(54) **PROCEDE ET DISPOSITIF D'EMISSION D'UN SIGNAL DANS UN SYSTÈME MULTI-ANTENNES, SIGNAL ET PROCEDE D'ESTIMATION DES CANAUX DE TRANSMISSION CORRESPONDANTS**

VERFAHREN ZUM SENDEN EINES SIGNALS IN EINEM MEHRANTENNENSYSTEM SOWIE ENTSPRECHENDES SENDESIGNAL UND KANALSCHÄTZUNGSVERFAHREN

METHOD FOR SENDING A SIGNAL IN A MULTI-ANTENNA SYSTEM, CORRESPONDING SIGNAL AND METHOD FOR CHANNEL ESTIMATION

(84) Etats contractants désignés:
**AT BE BG CH CY CZ DE DK EE ES FI FR GB GR HU IE IS IT LI LT LU MC NL PL PT RO SE SI SK TR**

(30) Priorité: **23.04.2004 EP 04364035**

(43) Date de publication de la demande:
**03.01.2007 Bulletin 2007/01**

(73) Titulaire: **3G Licensing S.A.**
**2132 Luxembourg (LU)**

(72) Inventeurs:
- **LEGOUABLE, Rodolphe**
  **F-35510 Cesson-Sevigne (FR)**
- **LE NIR, Vincent**
  **61100 Flers (FR)**
- **HELARD, Maryline**
  **F-35700 Rennes (FR)**
- **AUFFRAY, Jean-Michel**
  **F-92340 BOURG LA REINE (FR)**
- **HELARD, Jean-François**
  **F-35700 Rennes (FR)**

(74) Mandataire: **Camolese, Marco et al**
**Metroconsult S.r.l.**
**Via Sestriere 100**
**10060 None (TO) (IT)**

- CHAU YUEN ET AL: "Decoding of quasi-orthogonal space-time block code with noise whitening" 14TH IEEE 2003 INTERNATIONAL SYMPOSIUM ON PERSONAL, INDOOR AND MOBILE RADIO COMMUNICATION PROCEEDINGS, vol. 2, 7 septembre 2003 (2003-09-07), pages 2166-2170, XP010677944
- TIRKKONEN O ET AL: "Minimal non-orthogonality rate 1 space-time block code for 3+ Tx antennas" IEEE 6TH SYMPOSIUM ON SPREAD-SPECTRUM TECHNIQUES AND APPLICATIONS, vol. 2, 6 septembre 2000 (2000-09-06), pages 429-432, XP010516615
- JAFARKHANI H: "A quasi-orthogonal space-time block code" 2000 IEEE, vol. 1, 23 septembre 2000 (2000-09-23), pages 42-45, XP010532464 cité dans la demande
- NAGUIB A F ET AL: "Space-time coded modulation for high data rate wireless communications" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, 3 novembre 1997 (1997-11-03), pages 102-109, XP010254629 ISBN: 0-7803-4198-8

(56) Documents cités:
**US-B1- 6 307 882**

- HOTTINEN A ET AL: "A ROANDOMIZATION TECHNIQUE FOR NON-ORTHOGONAL SPACE-TIME BLOCK CODES" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY : IEEE, US, vol. VOL. 2 OF 4. CONF. 53, 6 mai 2001 (2001-05-06), pages 1479-1482, XP001067210 ISBN: 0-7803-6728-6

## Description

### 1. Domaine de l'invention

Le domaine de l'invention est celui des communications numériques par voie hertzienne. Plus précisément, l'invention concerne l'émission et la réception, et notamment l'estimation des canaux de transmission dans un système multi-antennes de type MIMO (« Multiple Input Multiple Output » pour « Entrées Multiples Sorties Multiples ») ou MISO (« Multiple Input Single Output » pour « Entrées Multiples Sortie Unique»), à partir de la transmission de signaux soumis à un codage espace-temps et/ou espace-fréquence.

Plus précisément encore, l'invention s'applique aux systèmes multi-antennes mettant en oeuvre plusieurs, et notamment plus de deux antennes d'émission. Les signaux comprennent des symboles de référence, connus d'au moins un récepteur et permettant à ce dernier d'estimer les canaux de transmission correspondant à chacune des antennes d'émission.

Un exemple d'application de l'invention est le domaine des radiocommunications, notamment pour les systèmes de troisième, quatrième génération et suivantes.

L'invention peut s'appliquer aux communications sur voie montante (d'un terminal vers une station de base), ainsi qu'aux communications sur voie descendante (d'une station de base vers un terminal).

### 2. Solutions de l'art antérieur

On connaît déjà plusieurs techniques d'estimation des canaux de transmission dans un système multi-antennes comprenant plusieurs antennes d'émission.

La plupart de ces techniques d'estimation se limite à l'application d'un codage espace-temps ou espace-fréquence dans des systèmes multiporteuses de type OFDM.

Ainsi, les premiers systèmes proposés utilisaient tous des codes espace-temps en blocs orthogonaux.

Alamouti, dans "A Simple Transmit Diversity Technique for Wireless Communications", IEEE Journal on Selected Areas in Communications, pp. 311-335, vol. 6, 1998, a présenté le premier système utilisant un code espace-temps en blocs orthogonal à rendement de 1 (où le rendement est défini comme le rapport entre le nombre N de symboles émis et le nombre L de temps symboles pendant lequel ils sont émis), pour deux antennes d'émission.

Un inconvénient majeur des codes espace-temps orthogonaux d'Alamouti est qu'ils sont limités aux systèmes à deux antennes d'émission, et qu'il n'est pas possible de les généraliser directement à un système à plus de deux antennes d'émission, tout en conservant un rendement unitaire.

Tarokh et al. ("Space-time Block Codes from Orthogonal Designs", IEEE Transactions on Information Theory, 1999, 45, (5), pp. 1456-1467) ont ensuite généralisé les codes espace-temps en blocs orthogonaux aux systèmes comprenant trois ou quatre antennes d'émission. Cependant, les rendements R=N/L obtenus n'étaient que de 1/2 ou 3/4.

Un inconvénient des codes espace-temps orthogonaux de Tarokh est donc que, bien qu'ils soient adaptés à des systèmes mettant en oeuvre un nombre supérieur d'antennes d'émission (trois ou quatre antennes), ils présentent un rendement inférieur à 1.

Barhumi et al. ont ensuite proposé dans "Pilot Tone-based Channel estimation for OFDM Systemes with Transmitter Diversity in Mobile Wireless Channels" une technique d'estimation de canal pour des systèmes OFDM multi-antennes (SISO-OFDM ou MIMO-OFDM), reposant sur une méthode d'estimation de canal OFDM classique, mettant notamment en oeuvre une extinction de certaines porteuses. Cependant, un inconvénient de cette technique d'estimation dans un système MIMO est que l'insertion de symboles de référence engendre en général une perte importante en efficacité spectrale, dès lors que pour chaque antenne d'émission, un symbole de référence est émis sur une porteuse de référence à un instant donné tandis que sur l'(es) autre(s) porteuses, aucune donnée n'est émise afin de ne pas venir perturber l'estimation du canal de transmission.

D'autres travaux ont ensuite été menés par Fragouli et al. dans "Training Based Channel Estimation for Multiple-Antenna Broadband Transmissions" concernant les séquences d'apprentissage pouvant être utilisées pour l'estimation de canal pour des systèmes multi-antennes.

Par la suite, Stirling-Gallacher et al.("Improving performance of coherent coded OFDM systems using space time transmit diversity", Electronics Letterers , vol. 37 N, Mars 2001, "Practical Pilot Patterns coherent coded OFDM systems using space time transmit diversity", European Wireless 2002 conference, 25-28 février 2002, Florence) ont envisagé une technique d'estimation de canal pour les systèmes MIMO-OFDM, se limitant à des systèmes à 2 antennes d'émission utilisant des codes espace/temps orthogonaux de type Alamouti ou Tarokh.

Un inconvénient de cette technique d'estimation est que le nombre d'antennes d'émission du système de transmission est limité par l'utilisation de codes espace-temps en blocs orthogonaux connus.

Chau Yuen et al décrivent, dans "Decoding of quasi-orthogonal space-time block code with noise whitening", 14th IEEE 2003 International Symposium on Personal, Indoor and Mobile Radio Communication Proceedings, vol. 2, 07.09.2003, pages 2166-2170, d'émettre un signal sur plusieurs antennes d'émission (par exemple 4 ou 8) vers au moins une antenne de réception, à l'aide d'un code espace-temps en bloc quasi-orthogonal de rendement unitaire représenté par une matrice de codage.

Des codes espace-temps similaires sont connus de Tirkkonen et al: "Minimal non-orthogonality rate 1 space-time block code for 3+ Tx antennas", IEEE 6th Symposium on Spread-Spectrum Techniques and Applications, vol. 2, 6.9.2000, pages 429-432 et de Jafarkhani: "A quasi-orthogonal space-time block code", 2000 IEEE, vol. 1, 23.9.2000, pages 42-45.

Naguib et al: "Space-time coded modulation for high data rate wireless communications", Global Telecommunications Conference 1997, GLOBECOM '97, IEEE, 3.11.1997, pages 102-109, ISBN: 0-7803-4198-8 ainsi que le brevet américain US 6,307,882 B1 décrivent des techniques d'estimation des différents canaux de propagation dans des systèmes multi-antennes en insérant des symboles de référence orthogonaux dans un signal de données, les symboles de référence étant ajoutés après le codage espace-temps des données.

### 3. Objectifs de l'invention

L'invention a notamment pour objectif de pallier ces inconvénients de l'art antérieur.

Plus précisément, un objectif de l'invention est de fournir une technique d'estimation des canaux de transmission qui soit plus efficace et performante que les techniques connues, tout en présentant une complexité réduite.

Encore un autre objectif de l'invention est de fournir une technique d'émission d'un signal comprenant des symboles de référence mettant en oeuvre une matrice de codage espace-temps et/ou espace-fréquence.

L'invention a encore pour objectif de fournir une telle technique qui soit adaptée aux systèmes multi-antennes de type MISO ou MIMO pour des modulations de type monoporteuse ou multiporteuses, combinées aux différentes techniques d'accès multiple (*CDMA,* de l'anglais « Code Division Multiplex Access » pour « accès multiple à répartition par code », *FDMA* pour « accès multiple fréquentiel », ou *TDMA* pour « accès multiple temporel »).

Un autre objectif de l'invention est de proposer une telle technique qui permette d'augmenter la diversité spatiale des systèmes tout en minimisant l'interférence entre les différents canaux de transmission et en limitant la perte d'efficacité spectrale.

En d'autres termes, l'invention a pour objectif de fournir une telle technique, qui puisse être mise en oeuvre de façon pratique et peu coûteuse dans un système mettant en oeuvre un nombre élevé d'antennes.

### 4. Caractéristiques essentielles de l'invention

Ces objectifs, ainsi que d'autres qui apparaîtront par la suite, sont atteints à l'aide d'un procédé d'émission selon la revendication 1.

Ainsi, l'invention repose sur une approche tout à fait nouvelle et inventive de l'émission d'un signal numérique, mettant en oeuvre une matrice de codage dans un système multi-antennes à plus de deux antennes d'émission.

Plus précisément, l'invention propose d'émettre sur les $n$ antennes d'émission les symboles de référence de la matrice de codage $M$ de rendement égal à 1, un vecteur de symboles de référence étant associé à la matrice de codage $M$ par l'intermédiaire d'une fonction de codage.

Une telle matrice de codage $M$ de rendement égal à 1 correspond soit à une matrice non orthogonale, soit à une matrice orthogonale par blocs, le rendement étant défini comme le rapport entre le nombre de symboles émis et le nombre de temps symboles pendant lequel ils sont émis.

Avantageusement, les symboles de référence sont répartis en espace et en temps et/ou en espace et en fréquence.

La matrice de codage met alors en oeuvre un codage espace-temps et/ou espace-fréquence.

Selon un premier mode de réalisation, la matrice de codage comprend au moins deux blocs, chacun des blocs étant orthogonaux.

De manière préférentielle, chacun des blocs de symboles de référence est émis séparément, chacun des blocs étant émis sur certaines antennes d'émission, les autres antennes d'émission étant éteintes.

Ainsi les données émises par un premier ensemble d'antennes ne sont pas perturbées par les données émises par un autre ensemble d'antennes, l'autre ensemble d'antennes n'émettant pas sur les mêmes porteuses au même instant.

Selon un autre mode de réalisation de l'invention, dit troisième mode de réalisation, le procédé d'émission comprend une étape de sélection entre une répartition en fréquence et une répartition en temps.

Notamment, cette étape de sélection peut tenir compte des caractéristiques d'un canal de transmission.

Selon un autre mode de réalisation de l'invention, dit second mode de réalisation, les symboles de référence sont émis sur l'ensemble des antennes d'émission après transformation mathématique par la matrice de codage $M$.

Ainsi la matrice de codage $M$ est une matrice globalement non orthogonale.

Notamment, la matrice de codage $M$ peut être obtenue par un codage de type Jafarkhani, et est de la forme :

$$M = \begin{vmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{vmatrix},$$

où $x_i$ est un symbole de référence et $x_i^*$ un symbole de référence conjugué, avec $i$ un entier relatif, $1 \le i \le 4$.

L'invention concerne également un dispositif d'émission correspondant selon la revendication 17.

Comme indiqué précédemment, l'invention peut ainsi s'appliquer aux communications sur voie montante, un dispositif d'émission correspondant à un terminal (ou étant alors compris dans un terminal), ainsi qu'aux communications sur voie descendante, un dispositif d'émission correspondant à une station de base (ou étant dans ce cas compris dans une station de base).

L'invention concerne encore un procédé d'estimation des canaux de transmission selon la revendication 10.

Ainsi, l'invention repose sur une approche tout à fait nouvelle et inventive de l'estimation de canaux dans un système multi-antennes à plus de deux antennes d'émission. On notera que cette approche est également nouvelle dans un système à deux antennes d'émission.

En effet, l'estimation des différents canaux de transmission est mise en oeuvre à partir de symboles de référence connus d'au moins un récepteur, un vecteur de symboles de référence étant associé à la matrice de codage $M$ par l'intermédiaire d'une fonction de codage.

Connaissant le vecteur de symboles de référence et la matrice de codage $M$ utilisées, on peut estimer les différents canaux de transmission, à partir de l'inverse de la matrice de codage, correspondant à la matrice de décodage.

Ainsi, à partir des symboles de référence et de la technique de codage utilisée, un dispositif de réception peut mettre en oeuvre des techniques de décodage, de filtrage ou d'égalisation, et une recombinaison des signaux issus des diverses antennes, afin d'estimer les différents canaux de transmission.

Avantageusement, la matrice de décodage est une matrice inverse intégrant une égalisation au sens du critère MMSE (en anglais « Minimum Mean Squared Error » pour « minimisation de l'erreur quadratique moyenne ») ou ZF (en anglais « Zero Forcing » pour « forçage à zéro »).

Notamment, le critère mis en oeuvre peut être le critère MMSE. La matrice de décodage est alors formée des éléments :

$$\hat{h} = \frac{M^H}{M^H M + \dfrac{I}{\gamma}} r \ ,$$

Le critère mis en oeuvre peut également être le critère ZF. La matrice de décodage est alors formée des éléments :

$$\hat{h} = \frac{M^H}{M^H M} r \ ,$$

avec :

- $r$ le vecteur de référence reçu ;
- $M$ la matrice de codage ;
- $I$ la matrice unité ;
- $\gamma$ le rapport signal à bruit ;
- $H$ le transposé conjugué.

De manière préférentielle, le procédé d'estimation comprend une étape d'interpolation, délivrant une estimation des canaux de transmission pour chacune des données utiles, à partir de l'estimation des symboles de référence.

Notamment, l'étape d'interpolation est remarquable en ce qu'elle met en oeuvre une interpolation temporelle et/ou une interpolation fréquentielle.

Cette étape d'interpolation peut appartenir au groupe comprenant :

- les interpolations linéaires ;
- les interpolations de Wiener.

Un autre aspect de l'invention concerne un dispositif de réception correspondant selon la revendication 19.

Comme indiqué précédemment, l'invention peut s'appliquer aux communications sur voie montante, le dispositif de réception correspondant à une station de base (ou étant alors compris dans une station de base), ainsi qu'aux communications sur voie descendante, le dispositif de réception correspondant à un terminal (ou étant dans ce cas compris dans un terminal).

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- les figures 1A et 1B présentent un système d'estimation de canaux dans un système multi-antennes à 4 antennes d'émission, avec des symboles répartis dans le domaine fréquentiel (figure 1A) ou temporel (figure 1B) selon un premier mode de réalisation de l'invention ;
- les figures 2A et 2B présentent une répartition particulière des symboles du système d'estimation de canaux des figures 1A et 1B ;
- les figures 3A et 3B illustrent un système d'estimation de canaux dans un système multi-antennes à 4 antennes d'émission, avec des symboles répartis dans le domaine fréquentiel (figure 3A) ou temporel (figure 3B) selon un troisième mode de réalisation de l'invention.

## 6. Description d'un mode de réalisation de l'invention

Le principe général de l'invention repose sur l'association d'une matrice de codage $M$ à un vecteur de symboles de référence, connus d'au moins un récepteur, de façon à permettre, dans le récepteur, d'estimer les différents canaux de propagation entre plus de deux antennes d'émission et une antenne de réception.

Cette matrice de codage $M$ est soit non orthogonale, soit orthogonale par blocs et présente un rendement égal à 1, le rendement étant défini comme le rapport entre le nombre de symboles émis et le nombre de temps symboles pendant lequel ils sont émis. Les symboles de la matrice de codage $M$ sont ensuite répartis en temps et/ou en fréquence sur chacune des antennes d'émission.

A la réception, pour chaque antenne de réception, le signal reçu est multiplié par la matrice inverse (intégrant une technique d'égalisation au sens du critère MMSE ou ZF) de la matrice de codage $M,$ en tenant compte éventuellement du bruit introduit par le récepteur.

Le résultat est un vecteur à $n$ dimensions qui représente les $n$ canaux de transmission entre les $n$ antennes d'émission et cette antenne de réception. Ce vecteur à $n$ dimensions est ensuite utilisé par le récepteur pour estimer le canal de transmission, notamment en répétant cette opération périodiquement et en réalisant une interpolation temporelle et/ou fréquentielle entre deux symboles de référence estimés lors de cette opération. L'interpolation est par exemple de type linéaire ou de Wiener.

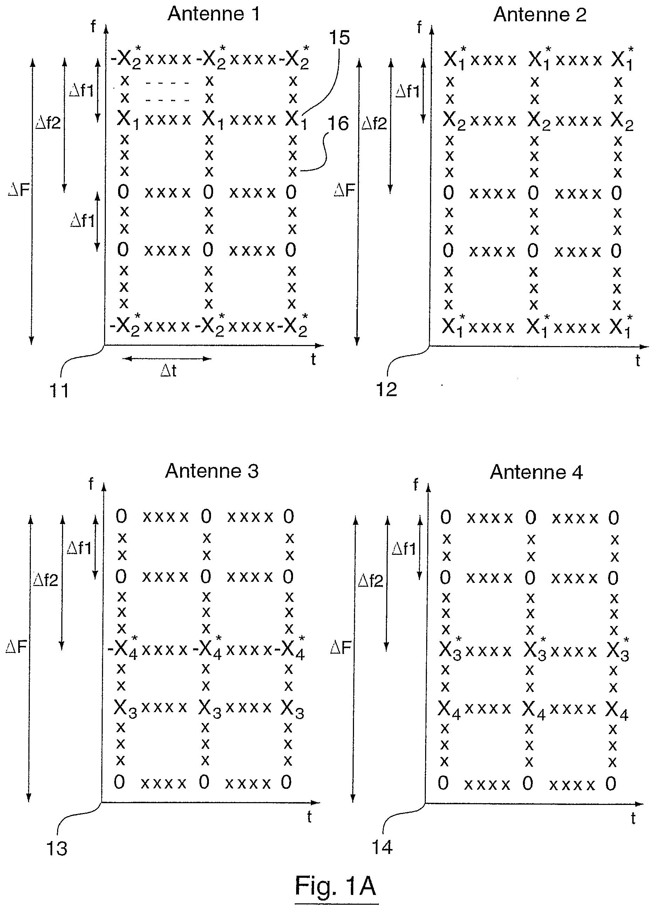

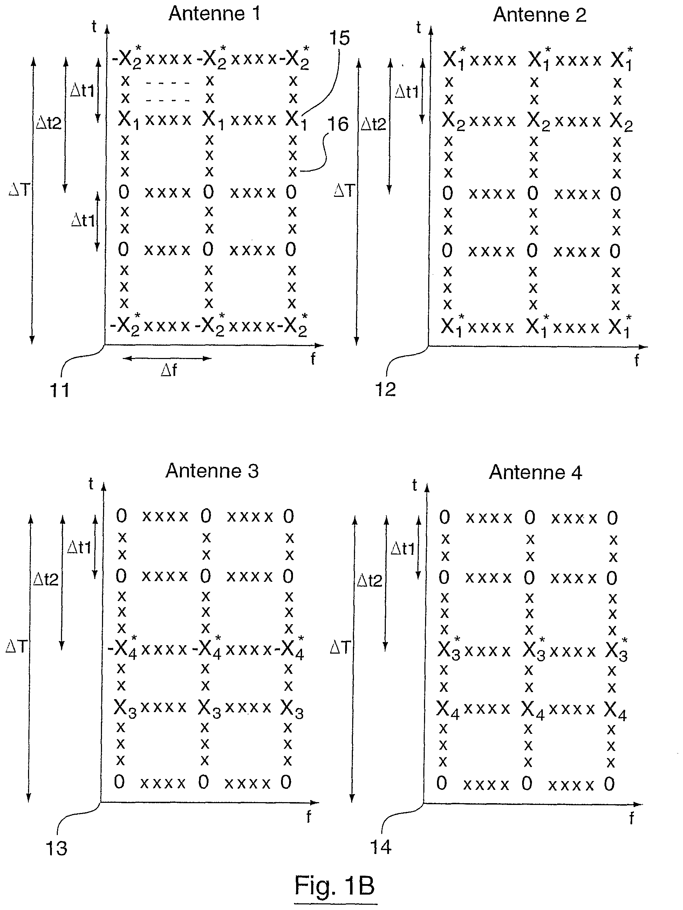

On présente, en relation avec les figures 1A et 1B, un premier mode de réalisation de l'invention, dans lequel on cherche à estimer les canaux de transmission d'un système multi-antennes à 4 antennes d'émission.

Selon ce premier mode de réalisation, la matrice de codage $M$ est une matrice par blocs, chacun des blocs comprenant $n$ symboles de référence. On applique alors un codage d'Alamouti espace-temps orthogonal sur chaque bloc de la matrice de codage $M.$ Chacun des blocs de $n$ symboles de référence est alors orthogonal.

L'Homme du Métier étendra facilement cet enseignement au cas où le nombre d'antennes, en émission et/ou en réception, est plus élevé. On peut ainsi appliquer un codage d'Alamouti sur chacun des blocs d'un système à $n = 4$, 6, 8,... antennes d'émission.

Selon ce mode de réalisation illustré en figures 1A et 1B, on applique le codage d'Alamouti sur les symboles de référence servant à l'estimation du canal, puis on émet ces symboles de référence codés sur un couple d'antennes d'émission, tout en gardant l'autre couple d'antennes éteint.

Ainsi, si on considère le vecteur de symboles de référence $[x_1\ x_2\ x_3,\ x_4]$, la matrice de codage $M$ qui lui est associé par l'intermédiaire de la fonction de codage est :

$$M = \begin{vmatrix} x_1 & x_2 & 0 & 0 \\ -x_2^* & x_1^* & 0 & 0 \\ 0 & 0 & x_3 & x_4 \\ 0 & 0 & -x_4^* & x_3^* \end{vmatrix}$$

où $x_i$ est un symbole de référence, $x_i^*$ un symbole de référence conjugué, avec $i$ un entier relatif et $1 \le i \le 4$, et 0 signifie qu'aucun symbole n'est émis sur l'antenne concernée.

Chaque bloc $\begin{vmatrix} x_1 & x_2 \\ -x_2^* & x_1^* \end{vmatrix}$ et $\begin{vmatrix} x_3 & x_4 \\ -x_4^* & x_3^* \end{vmatrix}$ la matrice de codage étant codé selon un code d'Alamouti, on a $M$

$\cdot M^H = I,$ avec $I$ la matrice unité, et $H$ le transposé conjugué.

Les symboles de référence de la matrice de codage $M$ sont ensuite émis après répartition espace-fréquence (figure 1A) ou espace-temps (figure 1B) sur les différentes antennes d'émission, l'axe spatial représentant les colonnes de la matrice $M$ et l'axe fréquentiel (figure 1A) ou temporel (figure 1B) représentant les lignes de la matrice $M$.

Il est bien entendu que d'autres répartitions espace-temps ou espace-fréquence des symboles peuvent être envisagées, ainsi qu'une combinaison des répartitions espace-temps et espace-fréquence.

En fait, chaque bloc de la matrice de codage $M$ est émis indépendamment sur ses antennes respectives, pendant que les autres blocs de la matrice de codage ne sont pas émis. Autrement dit, chaque bloc de symboles de référence est émis séparément, chacun des blocs étant émis sur certaines antennes d'émission tandis que les autres antennes sont éteintes.

On présente ainsi en figure 1A les symboles émis par les 4 antennes 11, 12, 13, 14 d'un système multi-antennes à 4 antennes d'émission, les symboles émis étant répartis dans le domaine fréquentiel (axe des ordonnées), avec $X_i$ un symbole de référence référencé 15, $X_i^*$ un symbole de référence conjugué ($i$ un entier relatif et $1 \le i \le 4$), x un symbole de données, référencé 16, et 0 signifie qu'aucun symbole n'est émis.

Les symboles émis par les 4 antennes 11, 12, 13, 14 sont répartis dans le domaine espace-fréquence (figure 1A) ou espace-temps (figure 1B) en fonction des paramètres ΔF, Δf₁, Δf₂ (figure 1A), ΔT, Δt₁, Δt₂ (figure 1B), représentant les motifs de répétition des symboles de référence.

Les valeurs choisies pour Δf, correspondant à l'espacement entre deux porteuses de référence (dans cet exemple Δf = {ΔF, Δf₁, Δf₂}), et pour Δt, correspondant à l'espacement entre deux symboles de référence à des instants connus (dans cet exemple Δt = {ΔT, Δt₁, Δt₂}), ne sont pas propres au système proposé mais dépendent de la stationnarité du canal de transmission.

En général, on considère :

- ΔF << B_C, avec B_C la bande de cohérence du canal ;
- ΔT << T_C, avec T_C le temps de cohérence du canal ;
- Δf₁ vérifie au mieux la stationnarité fréquentielle du canal ;
- Δt₁ vérifie au mieux la stationnarité temporelle du canal ;
- Δf₂ et Δt₂ dépendent d'un compromis entre la perte en efficacité spectrale et les performances du système.

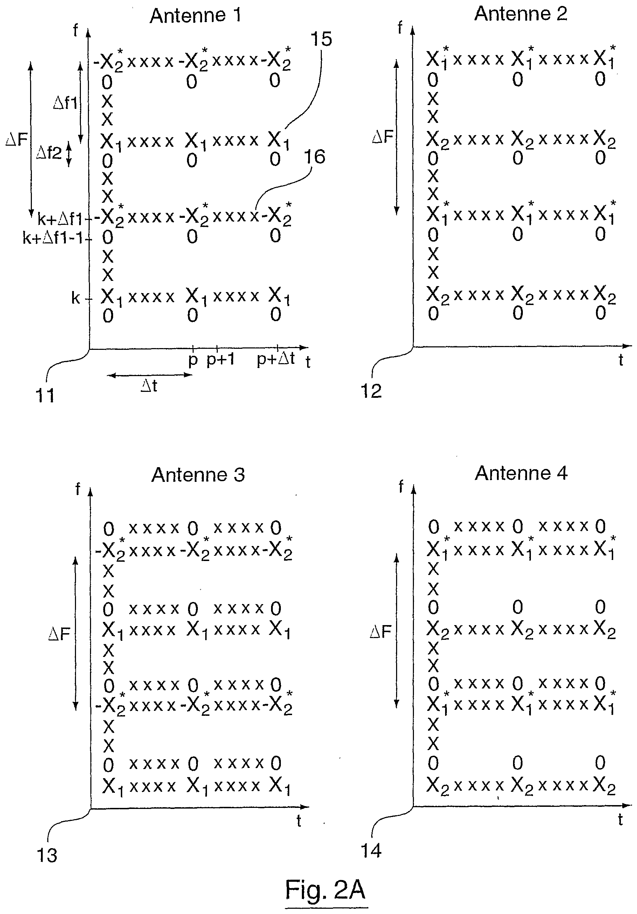

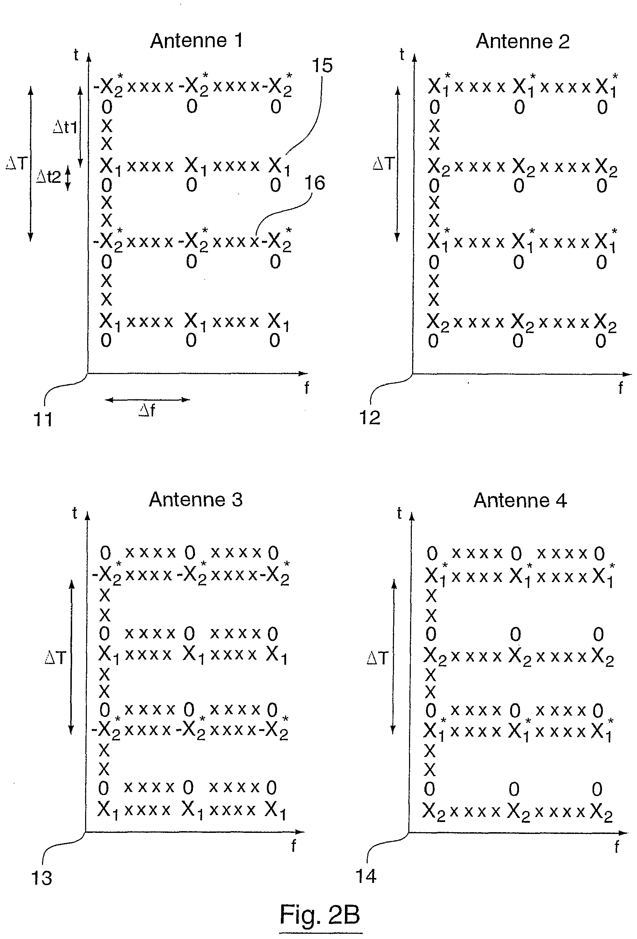

On présente également en figures 2A et 2B un autre exemple de la répartition espace-temps (figure 2A) ou espace-fréquence (figure 2B) des symboles selon ce premier mode de réalisation, en fonction des paramètres ΔF, Δf₁, Δf₂ (figure 2A), Δ, Δt₁, Δt₂ (figure 2B).

Selon cet exemple, la valeur des symboles de référence est choisie de sorte que $X_1 = X_3$ et $X_2 = X_4$.

Le vecteur de référence reçu au niveau d'une antenne de réception, modifié par le canal de transmission, peut alors s'écrire sous la forme $r = Xh + n$, où $h$ correspond à une modélisation du canal de transmission et $n$ est un vecteur de bruit blanc gaussien.

On peut également écrire ce vecteur de référence reçu sous forme vectorielle :

$$\begin{vmatrix} r_1 \\ r_2 \\ r_3 \\ r_4 \end{vmatrix} = \begin{vmatrix} x_1 & x_2 & 0 & 0 \\ -x_2^* & x_1^* & 0 & 0 \\ 0 & 0 & x_3 & x_4 \\ 0 & 0 & -x_4^* & x_3^* \end{vmatrix} \cdot \begin{vmatrix} h_1 \\ h_2 \\ h_3 \\ h_4 \end{vmatrix} + \begin{vmatrix} n_1 \\ n_2 \\ n_3 \\ n_4 \end{vmatrix}$$

Pour chacune des antennes de réception, on cherche à estimer le canal de transmission *h* en appliquant au vecteur de référence reçu une transformation mathématique par une matrice de décodage, correspondant à la matrice inverse intégrant une technique d'égalisation au sens du critère MMSE ou ZF de la matrice de codage *M.*

Selon le critère MMSE, la matrice de décodage est formée des éléments :

$$\hat{h} = \frac{M^H}{M^H M + \dfrac{I}{\gamma}} r,$$

avec :

- *r* ledit vecteur de référence reçu ;
- *M* ladite matrice de codage ;
- *I* une matrice unité ;
- $\gamma$ le rapport signal à bruit ;
- $^H$ le transposé conjugué.

Selon le critère ZF, la matrice de décodage est formée des éléments :

$$\hat{h} = \frac{M^H}{M^H M} r,$$

avec :

- *r* ledit vecteur de référence reçu ;
- *M* ladite matrice de codage ;
- $^H$ le transposé conjugué.

Ces deux critères conduisent à des résultats identiques à fort rapport signal à bruit.

Dans le cas d'un critère ZF, on obtient :

$$\begin{bmatrix} \hat{h}_1 \\ \hat{h}_2 \\ \hat{h}_3 \\ \hat{h}_4 \end{bmatrix} = \begin{bmatrix} \dfrac{1}{a} & 0 & 0 & 0 \\ 0 & \dfrac{1}{a} & 0 & 0 \\ 0 & 0 & \dfrac{1}{b} & 0 \\ 0 & 0 & 0 & \dfrac{1}{b} \end{bmatrix} \begin{bmatrix} a & 0 & 0 & 0 \\ 0 & a & 0 & 0 \\ 0 & 0 & b & 0 \\ 0 & 0 & 0 & b \end{bmatrix} \begin{bmatrix} h_1 \\ h_2 \\ h_3 \\ h_4 \end{bmatrix} + \begin{bmatrix} \dfrac{1}{a} & 0 & 0 & 0 \\ 0 & \dfrac{1}{a} & 0 & 0 \\ 0 & 0 & \dfrac{1}{b} & 0 \\ 0 & 0 & 0 & \dfrac{1}{b} \end{bmatrix} M^H n$$

avec

$$a = \sum_{i=1}^{2} |x_i|^2 \text{ et } b = \sum_{i=3}^{4} |x_i|^2 .$$

On peut ainsi déterminer les coefficients du canal à un instant p sur une porteuse k, à un instant p sur une porteuse k+$\Delta f_1$, ..., comme illustré en figure 2A.

En appliquant une interpolation fréquentielle entre les deux porteuses k et k+$\Delta f_1$ portant les symboles de références, le récepteur peut déterminer les coefficients du canal de propagation aux porteuses k, k+1, k+2, ..., k+$\Delta f_1$-1, k+$\Delta f_1$.

Une interpolation peut également être réalisée dans le domaine temporel, en considérant que les symboles de référence sont émis à l'instant p sur la porteuse k, à l'instant p+$\Delta t$ sur la même porteuse k, .... Le récepteur peut alors déterminer les coefficients du canal de propagation aux instants p, p+1, p+2, ..., p+$\Delta t$-1, p+$\Delta t$ et ainsi de suite.

Le récepteur peut donc réaliser une interpolation temporelle et/ou une interpolation fréquentielle. Cette étape d'interpolation met en oeuvre une technique d'interpolation bien connue de l'Homme du Métier, comme par exemple une interpolation de type linéaire, ou de Wiener.

L'autre couple d'antennes n'émettant pas sur les mêmes porteuses et aux mêmes instants, comme illustré en figures 1A,1B, 2A et 2B, le signal émis par le premier couple d'antennes n'est pas perturbé.

Chaque couple d'antennes émet alors alternativement les symboles de référence répartis sur ses antennes, de sorte à estimer l'ensemble des canaux de transmission du système mutli-antennes.

Selon l'invention, on peut ainsi appliquer des codes espace-temps orthogonaux à des systèmes présentant un plus grand nombre d'antennes d'émission, à l'aide d'une matrice de codage *M* conservant un rendement égal à 1. On peut ainsi appliquer un codage d'Alamouti, de rendement égal à 1, à des systèmes présentant 4, 6, 8, ..., antennes d'émission (alors que selon l'état de l'art, le nombre d'antennes d'émission du système de transmission est limité du fait de l'utilisation de codes espace-temps orthogonaux).

Cependant, bien que cette technique d'estimation de canal présente de meilleures performances en termes d'estimation puisqu'on éteint les autres groupes d'antennes lorsqu'un groupe d'antennes émet, cette technique s'accompagne d'une perte en efficacité spectrale et ne permet pas de profiter de la puissance totale des antennes, certaines porteuses ne portant aucune information à des instants définis.

On présente alors un second mode de réalisation de l'invention, dans lequel les symboles de référence sont émis sur l'ensemble des antennes d'émission après transformation mathématique par la matrice de codage *M,* la matrice de codage *M* étant non orthogonale.

Selon ce second mode de réalisation, on applique un codage espace-temps non orthogonal, de type Jafarkhani, comme présenté dans « A Quasi-Orthogonal Space-Time Block Code » (IEEE Transactions on Communications, Vol. 49, N°1, 2001, pp.1-4), sur les symboles de référence servant à l'estimation du canal.

Ce codage permet notamment d'émettre des signaux présentant une faible interférence.

Ainsi, si on considère le vecteur de symboles de référence [$x_1$ $x_2$ $x_3$ $x_4$], la matrice de codage *M* qui lui est associé par l'intermédiaire de la fonction de codage est :

$$M = \begin{vmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{vmatrix},$$

où $x_i$ est un symbole de référence, $x_i^*$ un symbole de référence conjugué, avec *i* un entier relatif, $1 \leq i \leq 4$.

Tous les symboles de référence de la matrice de codage *M* sont ensuite émis après répartition espace/fréquence sur l'ensemble des antennes d'émission, l'axe spatial représentant les colonnes de la matrice *M* et l'axe fréquentiel ou temporel représentant les lignes de la matrice *M.*

Comme décrit précédemment, le vecteur de référence reçu au niveau d'une antenne de réception, modifié par le canal de transmission, peut s'écrire sous la forme *r* = *Xh* + *n,* où *h* correspond à une modélisation du canal de transmission et *n* est un vecteur de bruit blanc gaussien.

On peut également écrire ce vecteur de référence reçu sous forme vectorielle :

$$\begin{bmatrix} r_1 \\ r_2 \\ r_3 \\ r_4 \end{bmatrix} = \begin{bmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{bmatrix} \cdot \begin{bmatrix} h_1 \\ h_2 \\ h_3 \\ h_4 \end{bmatrix} + \begin{bmatrix} n_1 \\ n_2 \\ n_3 \\ n_4 \end{bmatrix}.$$

De nouveau, pour chacune des antennes de réception, on cherche à estimer le canal de transmission $h$ en appliquant au vecteur de référence reçu une transformation mathématique par une matrice de décodage, correspondant à la matrice inverse intégrant une technique d'égalisation au sens du critère MMSE ou ZF de la matrice de codage $M$.

Dans le cas d'un critère MMSE, on obtient :

$$\begin{bmatrix} \hat{h}_1 \\ \hat{h}_2 \\ \hat{h}_3 \\ \hat{h}_4 \end{bmatrix} = \begin{bmatrix} a+\dfrac{1}{\gamma} & 0 & 0 & b \\ 0 & a+\dfrac{1}{\gamma} & -b & 0 \\ 0 & -b & a+\dfrac{1}{\gamma} & 0 \\ b & 0 & 0 & a+\dfrac{1}{\gamma} \end{bmatrix}^{-1} \begin{bmatrix} a & 0 & 0 & b \\ 0 & a & -b & 0 \\ 0 & -b & a & 0 \\ b & 0 & 0 & a \end{bmatrix} \begin{bmatrix} h_1 \\ h_2 \\ h_3 \\ h_4 \end{bmatrix} + \begin{bmatrix} a+\dfrac{1}{\gamma} & 0 & 0 & b \\ 0 & a+\dfrac{1}{\gamma} & -b & 0 \\ 0 & -b & a+\dfrac{1}{\gamma} & 0 \\ b & 0 & 0 & a+\dfrac{1}{\gamma} \end{bmatrix}^{-1} M^H \cdot n$$

avec

$$a = \sum_{i=1}^{4} \left| x_i \right|^2 \text{ et } b = 2\,\mathrm{Re}(x_1 x_4^* - x_2 x_3^*).$$

On réitère cette opération de manière identique pour chaque antenne de réception, quelque soit le nombre d'antennes. On peut ainsi déterminer les coefficients $h_c$ d'un canal de transmission à une fréquence $c$ ou un instant $c$ défini, et il ne reste qu'à appliquer une interpolation temporelle et/ou fréquentielle au niveau du récepteur entre les estimées de $h_c$ et $h_{c+k}$ (avec k = $\Delta$f dans le cas où c est une fréquence et k = $\Delta$t dans le cas où c est un instant) afin d'évaluer les valeurs manquantes. Ainsi, on obtient une connaissance globale de toutes les valeurs d'un canal de transmission pour chacune des antennes, ce qui permet d'égaliser le signal en réception de manière classique.

Selon ce deuxième mode de réalisation, il est possible d'étendre cette technique d'estimation à des systèmes présentant un nombre supérieur à deux antennes d'émission.

Ainsi, si on considère le vecteur de symboles de référence $[x_1\ x_2\ ...\ x_n]$, la matrice de codage $M$ qui lui est associé par l'intermédiaire de la fonction de codage est :

$$M = \begin{bmatrix} x_1 & \cdots & x_n \\ \vdots & \ddots & \vdots \\ x_{N-n+1} & \cdots & x_N \end{bmatrix},$$

où $x_i$ est un symbole de référence, avec $i$ un entier relatif $1 \le i \le N$, et $N = n^2$.

Cette matrice est de rang plein, de sorte qu'on peut l'inverser au cours de l'estimation des différents canaux.

Comme décrit précédemment, les symboles de référence de la matrice de codage $M$ sont émis après répartition espace/fréquence sur l'ensemble des antennes d'émission, et le vecteur de référence reçu au niveau d'une antenne de réception, modifié par le canal de transmission, peut s'écrire sous la forme

$$\begin{bmatrix} r_1 \\ r_2 \\ r_3 \\ r_4 \end{bmatrix} = \begin{bmatrix} x_1 & x_2 & x_3 & x_4 \\ x_5 & x_6 & x_7 & x_8 \\ x_9 & x_{10} & x_{11} & x_{12} \\ x_{13} & x_{14} & x_{15} & x_{16} \end{bmatrix} \begin{bmatrix} h_1 \\ h_2 \\ h_3 \\ h_4 \end{bmatrix} + \begin{bmatrix} n_1 \\ n_2 \\ n_3 \\ n_4 \end{bmatrix}.$$

De nouveau, pour chacune des antennes de réception, on applique au vecteur de référence reçu une transformation mathématique par une matrice de décodage, correspondant à la matrice inverse intégrant une technique d'égalisation au sens du critère MMSE ou ZF de la matrice de codage *M,* pour estimer le canal de transmission *h.*

Si on utilise une technique d'égalisation au sens du critère MMSE, on obtient :

$$\begin{bmatrix} \hat{h}_1 \\ \hat{h}_2 \\ \hat{h}_3 \\ \hat{h}_4 \end{bmatrix} = \left[ M^H M + \frac{I}{\gamma} \right]^{-1} M^H \begin{bmatrix} h_1 \\ h_2 \\ h_3 \\ h_4 \end{bmatrix} + \left[ M^H M + \frac{I}{\gamma} \right]^{-1} M^H n,$$

avec $\gamma$ le rapport signal à bruit.

Comme décrit précédemment, on peut ensuite déterminer les coefficients manquants d'un canal de transmission en appliquant une interpolation temporelle ou fréquentielle (ou les deux) au niveau du récepteur, en utilisant une technique classique d'interpolation.

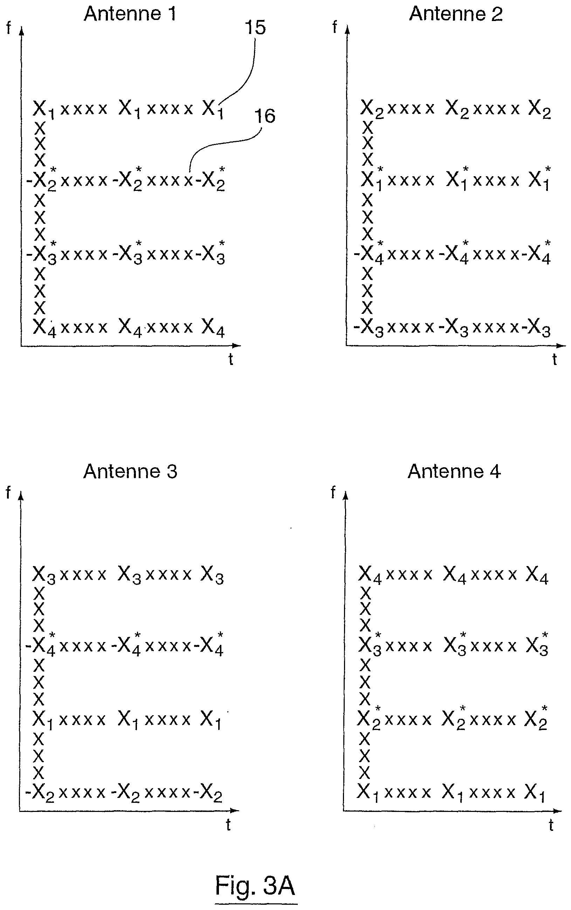

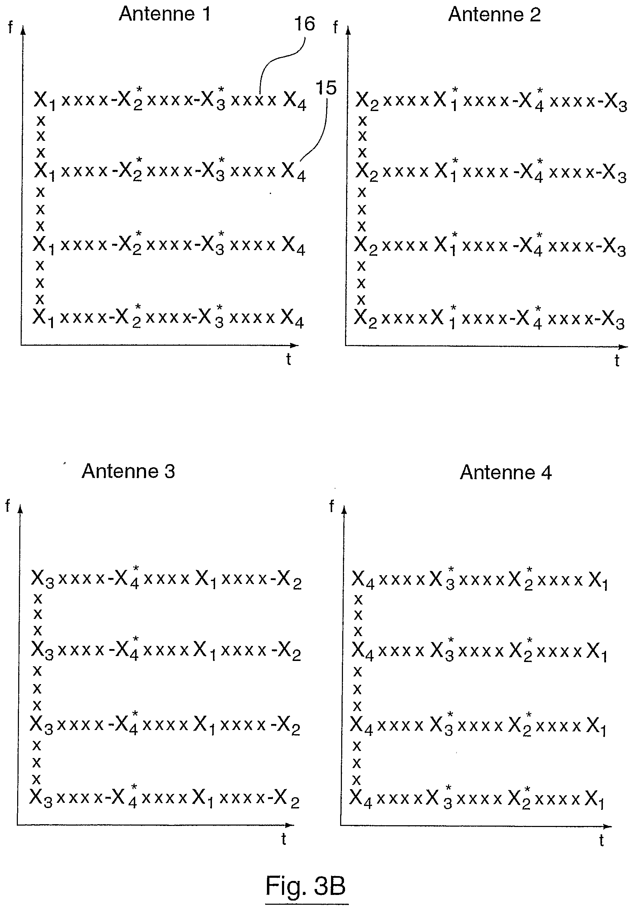

On présente désormais en relation avec les figures 3A et 3B un troisième mode de réalisation de l'invention, s'appliquant plus particulièrement aux systèmes multi-antennes de type MIMO.

Selon ce troisième mode de réalisation, un principe flexible est proposé permettant d'appliquer soit un codage spatio-temporel, soit un codage spatio-fréquentiel, en fonction des caractéristiques du canal de transmission.

Ainsi, la figure 3A illustre l'émission de 4 symboles de référence et de leurs conjugués espacés temporellement, dans un système multi-antennes à 4 antennes d'émission, avec $X_i$ un symbole de référence référencé 15, $X_i^*$ un symbole de référence conjugué (*i* un entier relatif et $1 \leq i \leq 4$), **x** un symbole de données, référencé 16.

La figure 3B illustre l'émission de 4 symboles de référence et de leurs conjugués espacés fréquentiellement, dans un système multi-antennes à 4 antennes d'émission.

Dans ce troisième mode de réalisation, les symboles de référence, une fois codés par l'intermédiaire de la matrice de codage *M,* sont répartis suivant l'axe temporel ou l'axe fréquentiel en fonction des propriétés du canal de propagation.

On peut ensuite commuter d'un codage spatio-temporel à un codage spatio-fréquentiel.

On rappelle que les valeurs choisies pour Δf (espacement entre deux porteuses de référence) et Δt (espacement entre deux symboles de référence à des instants connus) ne sont pas propres au système proposé mais dépendent respectivement de la bande et du temps de cohérence du canal de transmission.

En règle générale, la répartition dans le domaine temporel est plutôt appliquée dans le cas d'un canal variant temporellement, tandis que la répartition fréquentielle est davantage appliquée pour un canal variant fréquentiellement.

Ainsi, ayant une connaissance du canal à priori ou ayant calculé les valeurs de bande de cohérence et du temps de cohérence du canal, il est possible de commuter entre les deux structures d'insertion de symboles de référence décrites précédemment.

L'Homme du Métier étendra facilement l'enseignement de ces trois modes de réalisation à des systèmes présentant un nombre supérieur d'antennes, de même qu'à des systèmes présentant une répartition espace-temps et/ou espace-fréquence différente de celles proposées aux figures 1A, 1B, 2A, 2B, 3A et 3B.

Ainsi, selon l'invention, les différentes antennes d'émission émettent, sur une même porteuse et à un même instant, un signal caractérisé par un codage espace-temps et/ou espace-fréquence, ce qui limite la perte en efficacité spectrale.

Ce signal comprend donc, intrinsèquement, les caractéristiques de l'invention.

Finalement, un récepteur peut estimer chacun des canaux de transmission entre les différentes antennes d'émission et de réception à partir de ce codage spécifique et du traitement adéquat décrit précédemment. La technique particulière d'estimation de canal proposée selon l'invention peut d'ailleurs être appliquée au cas d'un système présentant deux antennes d'émission.

**Revendications**

1. Procédé d'émission d'un signal numérique à l'aide de *n* antennes d'émission, *n* étant strictement supérieur à 2, **caractérisé en ce qu'**on associe, à un vecteur de symboles de référence, une matrice de codage *M* de rendement égal à 1 par l'intermédiaire d'une fonction de codage,
lesdits symboles de référence étant connus d'au moins un récepteur et permettant à ce dernier d'estimer *n* canaux de transmission correspondant respectivement à chacune desdites antennes d'émission,
et **en ce qu'**on émet sur les *n* antennes d'émission les symboles de référence de ladite matrice de codage.

2. Procédé d'émission selon la revendication 1, **caractérisé en ce que** lesdits symboles de référence de ladite matrice de codage sont répartis en espace et en temps.

3. Procédé d'émission selon l'une quelconque des revendications 1 et 2, **caractérisé en ce que** lesdits symboles de référence de ladite matrice de codage sont répartis en espace et en fréquence.

4. Procédé d'émission selon l'une quelconque des revendications 1 à 3, **caractérisé en ce que** ladite matrice de codage comprend au moins deux blocs, chacun desdits blocs étant orthogonaux.

5. Procédé d'émission selon la revendication 4, **caractérisé en ce que** chacun desdits blocs de symboles de référence est émis séparément, chacun desdits blocs étant émis sur certaines desdites antennes d'émission, les autres antennes d'émission étant éteintes.

6. Procédé d'émission selon l'une quelconque des revendications 1 à 5, **caractérisé en ce qu'**il comprend une étape de sélection entre une répartition en fréquence et une répartition en temps.

7. Procédé d'émission selon la revendication 6, **caractérisé en ce que** ladite étape de sélection tient compte des caractéristiques d'un canal de transmission.

8. Procédé d'émission selon l'une quelconque des revendications 1 à 7, caractérisé en ce lesdits symboles de référence de ladite matrice de codage sont émis sur l'ensemble des antennes d'émission.

9. Procédé d'émission selon la revendication 8, **caractérisé en ce que** ladite matrice de codage est une matrice obtenue par un codage de type Jafarkhani, et est de la forme :

$$M = \begin{vmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{vmatrix},$$

où $x_i$ est un symbole de référence et $x_i^*$ un symbole de référence conjugué, avec *i* un entier relatif, $1 \leq i \leq 4$.

10. Procédé d'estimation des canaux de transmission dans un système multi-antennes mettant en oeuvre *n* antennes d'émission, où *n* est strictement supérieur à 2, et au moins une antenne de réception,
une matrice de codage *M* de rendement égal à 1 ayant été associée à un vecteur de symboles de référence par l'intermédiaire d'une fonction de codage et les symboles de référence de ladite matrice de codage ayant été émis sur les *n* antennes d'émission,
lesdits symboles de référence étant connus d'au moins un récepteur et permettant à ce dernier d'estimer *n* canaux de transmission correspondant respectivement à chacune desdites antennes d'émission,
**caractérisé en ce que** ledit procédé d'estimation comprend une étape de réception d'un vecteur de référence reçu, correspondant aux symboles de référence de ladite matrice de codage émis sur les *n* antennes d'émission, et modifiés par au moins un canal de transmission pour chacune des dites antennes d'émission,
et **en ce que**, pour chacune des dites antennes de réception, ledit vecteur de référence reçu subi une transformation mathématique par une matrice de décodage, inverse de ladite matrice de codage et tenant compte de l'effet d'un canal de transmission associé à ladite antenne de réception, pour fournir une estimation des effets desdits canaux de transmission sur lesdits symboles de référence.

**11.** Procédé d'estimation selon la revendication 10, **caractérisé en ce que** ladite matrice de décodage est une matrice inverse intégrant une égalisation au sens du critère de la minimisation de l'erreur quadratique moyenne MMSE ou du forçage à zéro ZF.

**12.** Procédé d'estimation selon la revendication 11, **caractérisé en ce que** ledit critère mis en oeuvre est le critère MMSE, et **en ce que** ladite matrice de décodage est formée des éléments :

$$\hat{h} = \frac{M^H}{M^H M + \dfrac{I}{\gamma}} r \ ,$$

avec :

- $r$ ledit vecteur de référence reçu ;
- $M$ ladite matrice de codage ;
- $I$ une matrice unité ;
- $\gamma$ le rapport signal à bruit ;
- $H$ le transposé conjugué.

**13.** Procédé d'estimation selon la revendication 11, **caractérisé en ce que** ledit critère mis en oeuvre est le critère ZF, et **en ce que** ladite matrice de décodage est formée des éléments :

$$\hat{h} = \frac{M^H}{M^H M} r \ ,$$

avec :

- $r$ ledit vecteur de référence reçu ;
- $M$ ladite matrice de codage ;
- $H$ le transposé conjugué.

**14.** Procédé d'estimation selon l'une quelconque des revendications 10 à 13, **caractérisé en ce qu'**il comprend une étape d'interpolation, délivrant une estimation desdits canaux de transmission pour chacune des données utiles, à partir de l'estimation desdits symboles de référence.

**15.** Procédé d'estimation selon la revendication 14, **caractérisé en ce que** ladite étape d'interpolation met en oeuvre une interpolation temporelle et/ou une interpolation fréquentielle.

**16.** Procédé d'estimation selon l'une quelconque des revendications 14 et 15, **caractérisé en ce que** ladite étape d'interpolation appartient au groupe comprenant :

- les interpolations linéaires ;
- les interpolations de Wiener.

**17.** Dispositif d'émission d'un signal numérique alimentant $n$ antennes d'émission, $n$ étant strictement supérieur à 2, **caractérisé en ce qu'**il comprend des moyens d'association à un vecteur de symboles de référence, d'une matrice de codage $M$ de rendement égal à 1, par l'intermédiaire d'une fonction de codage, lesdits symboles de référence étant connus d'au moins un récepteur et permettant à ce dernier d'estimer $n$ canaux de transmission correspondant respectivement à chacune des dites antennes d'émission, et **en ce que** lesdites antennes d'émission sont aptes à émettre les symboles de référence de ladite matrice de codage.

**18.** Dispositif d'émission selon la revendication 17, **caractérisé en ce qu'**il forme ou est intégré dans au moins un des équipements appartenant au groupe comprenant :

- une station de base ;
- un terminal.

**19.** Dispositif de réception dans un système multi-antennes mettant en oeuvre *n* antennes d'émission, où *n* est strictement supérieur à 2, et au moins une antenne de réception,
une matrice de codage *M* de rendement égal à 1 ayant été associée à un vecteur de symboles de référence par l'intermédiaire d'une fonction de codage et les symboles de référence de ladite matrice de codage ayant été émis sur les *n* antennes d'émission,
lesdits symboles de référence étant connus dudit récepteur et permettant à ce dernier d'estimer *n* canaux de transmission correspondant respectivement à chacune des dites antennes d'émission,
**caractérisé en ce qu'**il comprend des moyens de réception d'un vecteur de référence reçu, correspondant aux symboles de référence de ladite matrice de codage émis sur les *n* antennes d'émission, modifiés par au moins un canal de transmission pour chacune des dites antennes d'émission,
et **en ce que**, pour chacune des dites antennes de réception, ledit vecteur de référence reçu subi une transformation mathématique par une matrice de décodage, inverse de ladite matrice de codage et tenant compte de l'effet d'un canal de transmission associé à ladite antenne de réception, pour fournir une estimation des effets desdits canaux de transmission sur lesdits symboles de référence.

**20.** Dispositif de réception selon la revendication 19, **caractérisé en ce qu'**il forme ou est intégré dans au moins un des équipements appartenant au groupe comprenant :

- une station de base ;
- un terminal.

**Patentansprüche**

**1.** Verfahren zum Senden eines digitalen Signals mit Hilfe von n Sendeantennen, wobei n unbedingt größer als 2 ist, **dadurch gekennzeichnet, dass** einem Vektor von Referenzsymbolen eine Codierungsmatrix M mit einer Leistung gleich 1 mit Hilfe einer Codierungsfunktion zugeordnet wird,
wobei die Referenzsymbole mindestens einem Empfänger bekannt sind und es diesem letztgenannten ermöglichen, n Übertragungskanäle jeweils entsprechend jeder der Sendeantennen zu schätzen,
und dass auf den n Sendeantennen die Referenzsymbole der Codierungsmatrix gesandt werden.

**2.** Sendeverfahren nach Anspruch 1, **dadurch gekennzeichnet, dass** die Referenzsymbole der Codierungsmatrix räumlich und zeitlich verteilt sind.

**3.** Sendeverfahren nach einem der Ansprüche 1 und 2, **dadurch gekennzeichnet, dass** die Referenzsymbole der Codierungsmatrix räumlich und frequenziell verteilt sind.

**4.** Sendeverfahren nach einem der Ansprüche 1 bis 3, **dadurch gekennzeichnet, dass** die Codierungsmatrix mindestens zwei Blöcke umfasst, wobei jeder der Blöcke orthogonal ist.

**5.** Sendeverfahren nach Anspruch 4, **dadurch gekennzeichnet, dass** jeder der Blöcke von Referenzsymbolen getrennt gesandt wird, wobei jeder der Blöcke auf gewissen der Sendeantennen gesandt wird, wobei die anderen Sendeantennen abgeschaltet sind.

**6.** Sendeverfahren nach einem der Ansprüche 1 bis 5, **dadurch gekennzeichnet, dass** es einen Schritt der Auswahl zwischen einer Frequenzverteilung und einer zeitlichen Verteilung umfasst.

**7.** Sendeverfahren nach Anspruch 6, **dadurch gekennzeichnet, dass** der Auswahlschritt die Merkmale eines Übertragungskanals berücksichtigt.

**8.** Sendeverfahren nach einem der Ansprüche 1 bis 7, **dadurch gekennzeichnet, dass** die Referenzsymbole der Codierungsmatrix auf der Gesamtheit der Sendeantennen gesandt werden.

9. Sendeverfahren nach Anspruch 8, **dadurch gekennzeichnet, dass** die Codierungsmatrix eine Matrix ist, die durch Codierung des Typs Jafarkhani erhalten wird, und folgende Form hat:

$$M = \begin{vmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{vmatrix},$$

wobei $x_i$ ein Referenzsymbol und $x^*{}_i$ ein konjugiertes Referenzsymbol ist, wobei i eine relative ganze Zahl $1 \le i \le 4$ ist.

10. Verfahren zur Schätzung der Übertragungskanäle in einem Mehrantennensystem, das n Sendeantennen, wobei n unbedingt größer als 2 ist, und mindestens eine Empfangsantenne einsetzt,
wobei eine Codierungsmatrix M mit einer Leistung gleich 1 einem Vektor von Referenzsymbolen mit Hilfe einer Codierungsfunktion zugeordnet wurde, und die Referenzsymbole der Codierungsmatrix auf den n Sendeantennen gesandt wurden,
wobei die Referenzsymbole mindestens einem Empfänger bekannt sind und es diesem letztgenannten ermöglichen, n Übertragungskanäle jeweils entsprechend jeder der Sendeantennen zu schätzen,
**dadurch gekennzeichnet, dass** das Schätzungsverfahren einen Schritt des Empfangens eines empfangenen Referenzvektors entsprechend den Referenzsymbolen der Codierungsmatrix, die auf den n Sendeantennen gesandt wurden und durch mindestens einen Übertragungskanal für jede der Sendeantennen verändert wurden, umfasst, und dass für jede der Empfangsantennen der empfangene Referenzvektor einer mathematischen Umwandlung durch eine Decodierungsmatrix, die zu der Codierungsmatrix umgekehrt ist und die Auswirkung eines der Empfangsantenne zugeordneten Übertragungskanals berücksichtigt, unterzogen wird, um eine Schätzung der Auswirkungen der Übertragungskanäle auf die Referenzsymbole zu liefern.

11. Schätzungsverfahren nach Anspruch 10, **dadurch gekennzeichnet, dass** die Decodierungsmatrix eine umgekehrte Matrix ist, die eine Angleichung im Sinne des Kriteriums der Minimierung des durchschnittlichen quadratischen Fehlers MMSE oder des Setzens auf Null ZF einschließt.

12. Schätzungsverfahren nach Anspruch 11, **dadurch gekennzeichnet, dass** das eingesetzte Kriterium das Kriterium MMSE ist, und dass die Decodierungsmatrix von den folgenden Elementen gebildet ist:

$$\hat{h} = \frac{M^H}{M^H M + \dfrac{I}{\gamma}} r \, ,$$

wobei:

- r der empfangene Referenzvektor ist;
- M die Codierungsmatrix ist;
- I eine Einheitsmatrix ist;
- y das Signal-Rausch-Verhältnis ist;
- $^H$ die konjugierte Transponierte ist.

13. Schätzungsverfahren nach Anspruch 11, **dadurch gekennzeichnet, dass** das eingesetzte Kriterium das Kriterium ZF ist, und dass die Decodierungsmatrix von den folgenden Elementen gebildet ist:

$$\hat{h} = \frac{M^H}{M^H M} r \ ,$$

wobei:

- r der empfangene Referenzvektor ist;
- M die Codierungsmatrix ist;
- $^H$ die konjugierte Transponierte ist.

**14.** Schätzungsverfahren nach einem der Ansprüche 10 bis 13, **dadurch gekennzeichnet, dass** es einen Interpolationsschritt umfasst, der eine Schätzung der Übertragungskanäle für jedes der nützlichen Daten aus der Schätzung der Referenzsymbole liefert.

**15.** Schätzungsverfahren nach Anspruch 14, **dadurch gekennzeichnet, dass** der Interpolationsschritt eine zeitliche und/oder eine frequenzielle Interpolation einsetzt.

**16.** Schätzungsverfahren nach einem der Ansprüche 14 und 15, **dadurch gekennzeichnet, dass** der Interpolationsschritt der Gruppe angehört, umfassend:

- die linearen Interpolationen;
- die Wiener-Interpolationen.

**17.** Vorrichtung zum Senden eines digitalen Signals, die n Sendeantennen versorgt, wobei n unbedingt größer als 2 ist, **dadurch gekennzeichnet, dass** sie Mittel zur Zuordnung einer Codierungsmatrix M mit einer Leistung gleich 1 mit Hilfe einer Codierungsfunktion zu einem Vektor von Referenzsymbolen umfasst, wobei die Referenzsymbole mindestens einem Empfänger bekannt sind und es diesem letztgenannten ermöglichen, n Übertragungskanäle jeweils entsprechend jeder der Sendeantennen zu schätzen, und dass die Sendeantennen geeignet sind, die Referenzsymbole der Codierungsmatrix zu senden.

**18.** Sendevorrichtung nach Anspruch 17, **dadurch gekennzeichnet, dass** sie mindestens eine der Ausrüstungen bildet oder in eine solche integriert ist, die der Gruppe angehört, umfassend:

- eine Basisstation;
- ein Terminal.

**19.** Empfangsvorrichtung in einem Mehrantennensystem, das n Sendeantennen, wobei n unbedingt größer als 2 ist, und mindestens eine Empfangsantenne einsetzt, wobei eine Codierungsmatrix M mit einer Leistung gleich 1 mit Hilfe einer Codierungsfunktion einem Vektor von Referenzsymbolen zugeordnet wurde, und die Referenzsymbole der Codierungsmatrix auf den n Sendeantennen gesandt wurden, wobei die Referenzsymbole dem Empfänger bekannt sind und es diesem letztgenannten ermöglichen, n Übertragungskanäle jeweils entsprechend jeder der Sendeantennen zu schätzen, **dadurch gekennzeichnet, dass** sie Mittel zum Empfangen eines empfangenen Referenzvektors entsprechend den Referenzsymbolen der auf den n Sendeantennen gesandten Codierungsmatrix, die durch mindestens einen Übertragungskanal für jede der Sendeantennen verändert wurden, umfasst, und dass für jede der Empfangsantennen der empfangene Referenzvektor einer mathematischen Umwandlung durch eine Decodierungsmatrix, die zu der Codierungsmatrix umgekehrt ist und die Auswirkung eines der Empfangsantenne zugeordneten Übertragungskanals berücksichtigt, unterzogen wird, um eine Schätzung der Auswirkungen der Übertragungskanäle auf die Referenzsymbole zu liefern.

**20.** Empfangsvorrichtung nach Anspruch 19, **dadurch gekennzeichnet, dass** sie mindestens eine der Ausrüstungen bildet oder in eine solche integriert ist, die der Gruppe angehört, umfassend:

- eine Basisstation;
- ein Terminal.

**Claims**

1. A method for transmitting a digital signal using $n$ transmitting antennas, $n$ being strictly higher than 2, **characterised in that**, with a vector of reference symbols, is associated an encoding matrix $M$ with an efficiency equal to 1 through an encoding function, said reference symbols being known to at least one receiver and enabling the latter to estimate $n$ transmission channels corresponding to each of said transmitting antennas respectively, and **in that** the reference symbols of said encoding matrix are transmitted on the n transmitting antennas.

2. The transmitting method according to claim 1, **characterised in that** said reference symbols of said encoding matrix are space and time divided.

3. The transmitting method according to any of claims 1 and 2, **characterised in that** said reference symbols of said encoding matrix are space and frequency divided.

4. The transmitting method according to any of claims 1 to 3, **characterised in that** said encoding matrix comprises at least two blocs, each of said blocs being orthogonal.

5. The transmitting method according to claim 4, **characterised in that** each of said blocs of reference symbols is separately transmitted, each of said blocs being transmitted on some of said transmitting antennas, the other transmitting antennas being OFF.

6. The transmitting method according to any of claims 1 to 5, **characterised in that** it comprises a step of selecting between a frequency division and a time division.

7. The transmitting method according to claim 6, **characterised in that** said selecting step takes the characteristics of a transmission channel into account.

8. The transmitting method according to any of claims 1 to 7, **characterised in that** said reference symbols of said encoding matrix are transmitted on all the transmitting antennas.

9. The transmitting method according to claim 8, **characterised in that** said encoding matrix is a matrix obtained by a Jafarkhani type encoding, and is in the form:

$$M = \begin{vmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{vmatrix},$$

where $x_i$ is a reference symbol and $x_i^*$ is a conjugate reference symbol, with $i$ being a relative integer, $1 \le i \le 4$.

10. A method for estimating the transmission channels in a multi-antenna system implementing $n$ transmitting antennas, where $n$ is strictly higher than 2, and at least one receiving antenna, an encoding matrix $M$ with an efficiency equal to 1 having been associated with a vector of reference symbols through an encoding function and the reference symbols of said encoding matrix having been transmitted on the $n$ transmitting antennas, said reference symbols being known to at least one receiver and enabling the latter to estimate $n$ transmission channels corresponding to each of said transmitting antennas respectively, **characterised in that** said estimating method comprises a step of receiving a received reference vector, corresponding to the reference symbols of said encoding matrix transmitted on the $n$ transmitting antennas, and modified by at least one transmission channel for each of said transmitting antennas, and **in that**, for each of said receiving antennas, said received reference vector undergoes a mathematical transformation by a decoding matrix, being inverse to said encoding matrix and taking the effect of a transmission channel associated with said receiving antenna into account, to provide estimation of the effects of said transmission channels on said reference symbols.

11. The estimating method according to claim 10, **characterised in that** said decoding matrix is an inverse matrix integrating an equalisation in the sense of the criterion of the minimisation of mean quadratic error MMSE or zero forcing ZF.

12. The estimating method according to claim 11, **characterised in that** said criterion implemented is the MMSE criterion, and **in that** said decoding matrix is formed by the elements:

$$\hat{h} = \frac{M^H}{M^H M + \dfrac{I}{\gamma}} r \ ,$$

with:

- $r$ said received reference vector;
- $M$ said encoding matrix;
- $I$ a unit matrix;
- $\gamma$ the signal-to-noise ratio;
- $H$ the conjugate transpose.

13. The estimating method according to claim 11, **characterised in that** said criterion implemented is the ZF criterion, and **in that** said decoding matrix is formed by the elements:

$$\hat{h} = \frac{M^H}{M^H M} r \ ,$$

with:

- $r$ said received reference vector;
- $M$ said encoding matrix;
- $H$ the conjugate transpose.

14. The estimating method according to any of claims 10 to 13, **characterised in that** it comprises an interpolating step, delivering an estimation of said transmission channels for each of the payloads, from the estimation of said reference symbols.

15. The estimating method according to claim 14, **characterised in that** said interpolating step implements a time interpolation and/or a frequency interpolation.

16. The estimating method according to any of claims 14 and 15, **characterised in that** said interpolating step belongs to the group comprising:

- linear interpolations;
- Wiener interpolations.

17. A device for transmitting a digital signal powering $n$ transmitting antennas, $n$ being strictly higher than 2, **characterised in that** it comprises means for associating with a vector of reference symbols, an encoding matrix $M$ with an efficiency equal to 1, through an encoding function, said reference symbols being known to at least one receiver and enabling the latter to estimate $n$ transmission channels corresponding to each of said transmitting antennas respectively, and **in that** said transmitting antennas are able to transmit the reference symbols of said encoding matrix.

18. The transmitting device according to claim 17, **characterised in that** it forms or is integrated in at least one of the equipment belonging to the group comprising:

- a base station;
- a terminal.

19. A receiving device in a multi-antenna system implementing $n$ transmitting antennas, where $n$ is strictly higher than 2, and at least one receiving antenna,

an encoding matrix $M$ with an efficiency equal to 1 having been associated with a vector of reference symbols through an encoding function and the reference symbols of said encoding matrix having been transmitted on the $n$ transmitting antennas,

said reference symbols being known to said receiver and enabling the latter to estimate n transmission channels corresponding to each of said transmitting antennas respectively,

**characterised in that** it comprises means for receiving a received reference vector, corresponding to the reference symbols of said encoding matrix transmitted on the $n$ transmitting antennas, modified by at least one transmission channel for each of said transmitting antennas,

and it that, for each of said receiving antennas, said received reference vector undergoes a mathematical transformation by a decoding matrix, being inverse to said encoding matrix and taking the effect of a transmission channel associated with said receiving antenna into account, to provide estimation of the effects of said transmission channels on said reference symbols.

20. The receiving device according to claim 19, **characterised in that** it forms or is integrated in at least one of the equipment belonging to the group comprising:

- a base station;
- a terminal.

Fig. 1A

Fig. 1B

Fig. 2A

Fig. 2B

Fig. 3A

Fig. 3B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6307882 B1

**Littérature non-brevet citée dans la description**

- **ALAMOUTI.** A Simple Transmit Diversity Technique for Wireless Communications. *IEEE Journal on Selected Areas in Communications,* 1998, vol. 6, 311-335
- **TAROKH et al.** Space-time Block Codes from Orthogonal Designs. *IEEE Transactions on Information Theory,* 1999, vol. 45 (5), 1456-1467
- **STIRLING-GALLACHER et al.** Improving performance of coherent coded OFDM systems using space time transmit diversity. *Electronics Letterers,* Mars 2001, vol. 37
- **FLORENCE.** Practical Pilot Patterns coherent coded OFDM systems using space time transmit diversity. *European Wireless 2002 conference,* 25 Février 2002

- **CHAU YUEN et al.** Decoding of quasi-orthogonal space-time block code with noise whitening. *14th IEEE 2003 International Symposium on Personal, Indoor and Mobile Radio Communication Proceedings,* 07 Septembre 2003, vol. 2, 2166-2170
- **TIRKKONEN et al.** Minimal non-orthogonality rate 1 space-time block code for 3+ Tx antennas. *IEEE 6th Symposium on Spread-Spectrum Techniques and Applications,* 06 Septembre 2000, vol. 2, 429-432
- **JAFARKHANI.** A quasi-orthogonal space-time block code. IEEE, 23 Septembre 2000, vol. 1, 42-45
- Space-time coded modulation for high data rate wireless communications. **NAGUIB et al.** Global Telecommunications Conference 1997, GLOBECOM '97. IEEE, 03 Novembre 1997, 102-109
- A Quasi-Orthogonal Space-Time Block Code. *IEEE Transactions on Communications,* 2001, vol. 49 (1), 1-4